# EUROPEAN PATENT APPLICATION

(11) **EP 2 425 737 A1**
(43) Date of publication of application: **07.03.2012**
(21) Application number: 10009184.2
(22) Date of filing: 03.09.2010
(51) Int. Cl.: A45B 11/00, F16B 7/04

(54) **A kit of parts for clamping an elongated member**

(71) Applicant: Umbrosa NV, 8800 Roeselare-Beveren (BE)
(72) Inventor: Haemers, Christophe, 8700 Tielt (BE); Vanhoucke, Jimmy, 8630 Veurne (BE)
(74) Representative: BiiP cvba

(57) **Abstract**

The present invention is directed to a kit of parts for clamping an elongated member, comprising:
- a coupling element (b) suitable for receiving and being fixed to said elongated member (a); and
- a clamp (c) having two jaws (d) for grasping said coupling element;

wherein said coupling element is shaped for being grasped by said jaws and has a cross section outer diameter (e); and wherein the width between the distal ends (f) of said jaws is greater than a cross section outer diameter (g) of said elongated member and smaller than said cross section outer diameter of said coupling element.
Further, the present invention is directed to an umbrella or parasol comprising such kit of parts.

## Description

### FIELD OF THE INVENTION

The present invention relates to a kit of parts for clamping an elongated member. Further, it relates to an umbrella or parasol comprising such kit of parts.

### BACKGROUND OF THE INVENTION

Systems for clamping an elongated part such as a pole, shaft, rod, etc are used in a wide variety of applications. A particular application is its use in umbrella or parasol equipment wherein usually the height and/or angle of inclination is adaptable.

Generally, such clamping systems for umbrellas or parasols are very simple. An example is a screw and nut or wing nut, which unfortunately can get lost easily when mounting or during periods the umbrella or parasol is stored.

Further, mounting such clamping system usually requires additional equipment, such as a spanner and the like.

Obviously, another problem of using screw and nut clamping systems is that every time one seeks to change the height of the umbrella or parasol, the nuts have to be released and tightened again.

In attempt to solve the above problems, quick release skewers are used. However, such skewers require a relatively high force to move them in locking position or again in release position.

Another general problem with the above conventional clamping systems Is that usually more than one person is required to mount the umbrella or parasol shaft in the clamp, unless one uses one hand to keep the shaft in the desired position and the other hand to close the clamp, the latter resulting in ergonomic inefficiency and often also in unsafe situations.

US541123 addresses the above problem and describes a golf cart umbrella holder has a vertical spine with a lower support member for supporting the handle portion of the umbrella, a medial gripping member for gripping the handle portion, and an upper stop member for preventing vertical removal of the umbrella from the holder.

However, this holder is meant for rather small lightweight umbrellas and is not sufficiently rigid for rather big garden umbrellas or parasols.

From the above, there is a clear need for a clamping system which is simple and can easily, quickly, without additional equipment, and with ergonomic efficiency be mounted, while achieving reliable and safe clamping of an elongated member such as an umbrella or parasol shaft.

Another object of the present invention is that clamping the shaft can be achieved without requiring a relatively high force from the user.

Another object of the invention is to provide a clamping system that is sufficiently rigid and can be safely mounted by one person, even in case of big size and heavy umbrellas or parasols.

A still further object of the invention is to provide a clamping system for an elongated member that is economical to manufacture.

The present invention meets the above objects by providing a kit of parts for clamping an elongated member, comprising:
- a coupling element (b) suitable for receiving and being fixed to said elongated member; and
- a clamp (c) having two jaws (d) for grasping said coupling element;
wherein said coupling element is shaped for being grasped by said jaws and has a cross section outer diameter (e); and wherein the width between the distal ends (f) of said jaws is greater than a cross section outer diameter (g) of said elongated member and smaller than said cross section outer diameter of said coupling element.

### SUMMARY OF THE INVENTION

The present invention is directed to a kit of parts for clamping an elongated member, comprising:
- a coupling element (b) suitable for receiving and being fixed to said elongated member; and
- a clamp (c) having two jaws (d) for grasping said coupling element;
wherein said coupling element is shaped for being grasped by said jaws and has a cross section outer diameter (e); and wherein the width between the distal ends (f) of said jaws is greater than a cross section outer diameter (g) of said elongated member and smaller than said cross section outer diameter of said coupling element.

Further, the present invention is directed to an umbrella or parasol comprising such kit of parts.

### BRIEF DESCRIPTION OF THE DRAWINGS

FIG 1 schematically illustrates an embodiment of a kit of parts for clamping an elongated member in accordance with the present invention.
FIG 2 schematically illustrates another embodiment of a kit of parts for clamping an elongated member in accordance with the present invention.
FIG 3 illustrates a clamp of preferred embodiment of a kit of parts in accordance with the present invention.

### DESCRIPTION OF THE INVENTION

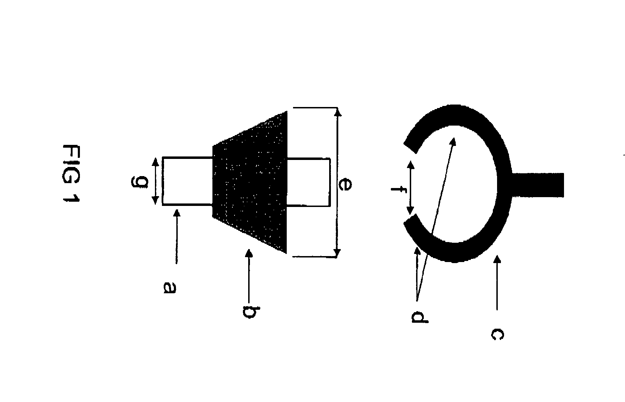

According to a first embodiment of the present invention and as illustrated in FIG 1, a kit of parts for clamping an elongated member is provided, comprising:
- a coupling element (b) suitable for receiving and being fixed to said elongated member (a); and
- a clamp (c) having two jaws (d) for grasping said coupling element;
wherein said coupling element is shaped for being grasped by said jaws and has a cross section outer diameter (e); and wherein the width between the distal ends (f) of said jaws is greater than a cross section outer diameter (g) of said elongated member and smaller than said cross section outer diameter of said coupling element.

As the width between the distal ends of the jaws is greater than a cross section outer diameter of the elongated member, the elongated member can be put in the clamp by sliding it between the jaws without lifting it at a level above the clamp.

Further, since the coupling element is shaped for being grasped by the jaws, and since the width between the distal ends of the jaws is smaller than the cross section outer diameter of the coupling element, the coupling element is reliably secured in the clamp.

So, after fixing the coupling element on the elongated member, - in case the coupling element is not already inherently part of the elongated member -, the user is able to clamp the elongated member very easily, not being obliged anymore to use one hand for opening or closing a clamp. The user may even use both hands for holding the elongated member while clamping it, which results obviously in a simple, easy and quick way, without additional equipment, and with ergonomic efficiency, while achieving reliable and safe clamping.

Another advantage is that such kit of parts can be manufactured in an economically beneficial way, and can be easily made sufficiently rigid for using in big size and heavy equipment, such as big garden umbrellas or parasols.

In an embodiment in accordance with the present invention, a kit of parts for clamping an elongated member is provided, wherein the cross section outer diameter of the coupling element at least partially fits between the jaws and axially increases.

In an embodiment in accordance with the present invention, a kit of parts for clamping an elongated member is provided wherein said jaws may be shaped such that the clamp provides at least two positions (h) for grasping the coupling element and such that these positions are differently orientated in axial direction of the coupling element.

By shaping the jaws such that they provide at least two positions in the clamp differently orientated In axial direction of the coupling element, the angle of inclination of an umbrella or parasol according to the position of the sun or the falling direction of the rain can be changed allowing the user to use both hands for holding the shaft of the umbrella or parasol.

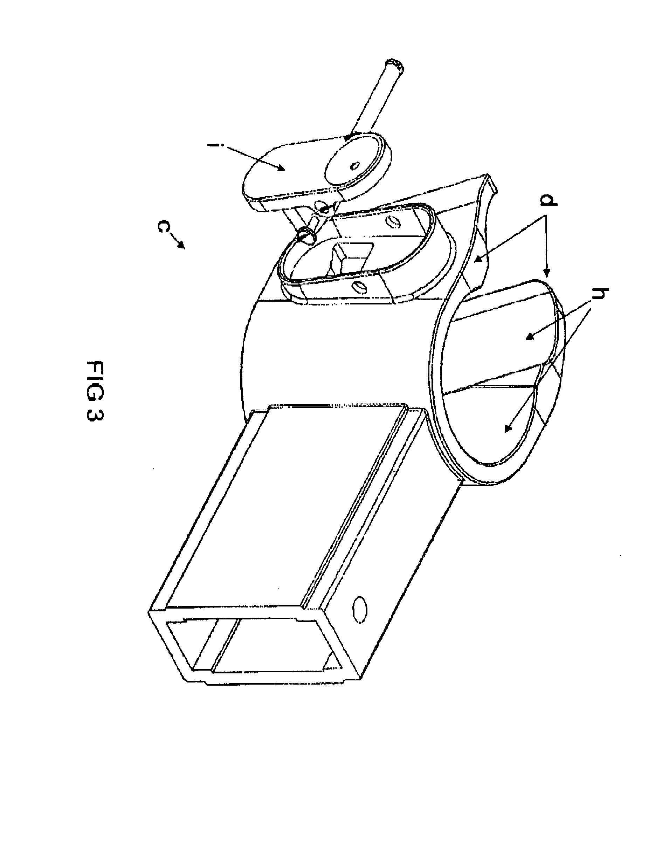

In a preferred embodiment as illustrated In FIG 3, the jaws are shaped such that both positions (h) are overlapping which obviously increases the rigidness and mechanical strength of the clamp.

The angle between the orientations of the positions in axial direction of the coupling element may be between 0 and 90 degrees, between 10 and 60 degrees, between 10 and 45 degrees, and usually about 20 degrees.

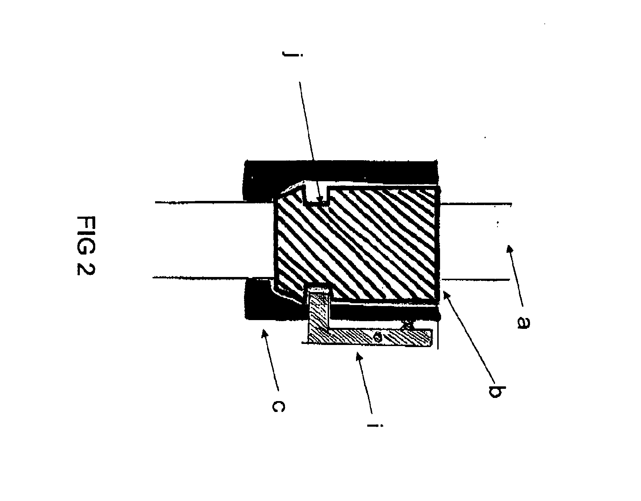

In a further embodiment of a kit of parts according to the present invention and as illustrated in FIG 2, a resilient biased switch (i) may be provided engaging with a recess (j) in the coupling element, thereby preventing the latter from being released. Such resilient biased switch may be useful in case of undesired lifting force, e.g. an umbrella or parasol lifted by wind, preventing the coupling element, and so the elongated member, from being pulled out of the clamp.

In a preferred embodiment of the present invention, the resilient biased switch may comprise an engaging element shaped suitable to engage the recess in both the at least two positions.

The resilient biased switch may be designed such that, upon slightly pushing it the engaging element retracts from the recess, making removing the elongated member or changing its position very easy.

The coupling element may have any cross section form, such as rectangular, circular, etc. as long as the form is such that it can be grasped by the jaws, preferably such that its cross section outer diameter at least partially fits between the jaws and axially increases for being grasped by the jaws. The diameter may be increasing continuously (e.g. having a cone-like or pyramid-like form), or gradually (e.g. demonstrating a ring- shaped part).

Further, the coupling element may be mounted on the elongated member by the manufacturer or the user, or may be an inherent part of the elongated member, i.e. a part of the elongated member with increased diameter.

Additionally, the coupling element may have a recess in its outer surface for engaging with a blased switch.

The kit of parts may additionally comprise a base structure, pole or wall bracket for holding the clamp. Such base structure, pole or wall bracket may be equipped with means for varying the orientation and/or height of the clamp, e.g. a telescopic pole or a rotating base.

In the context of the present invention, the elongated member may be any shaft, rod or pole. In a particular embodiment, the elongated member may be a shaft of an umbrella or parasol.

Further, the clamp and the coupling element may be made of any material suitable for clamping an elongated member. Preferably, they may be made of aluminum, stainless steel, plastics, composite materials, or combinations thereof. These materials have the advantage that they can be made lightweight, rustproof, sufficiently rigid and strong.

Additionally, in another embodiment in accordance with the present invention an umbrella or parasol is provided comprising a kit of parts as described in the above embodiments.

Obviously, such kit of parts in accordance with present invention may be used in all umbrella or sunbrella equipment, shade sail equipment, wind screen equipment, tent equipment, boating or surfing equipment, decoration equipment, stage set equipment, and partitioning screen equipment.

## Claims

1. A kit of parts for clamping an elongated member (a), comprising:
- a coupling element (b) suitable for receiving and being fixed to said elongated member (a); and
- a clamp (c) having two jaws (d) for grasping said coupling element;
wherein said coupling element is shaped for being grasped by said jaws and has a cross section outer diameter (e); and wherein the width between the distal ends (f) of said jaws is greater than a cross section outer diameter (g) of said elongated member and smaller than said cross section outer diameter of said coupling element.

2. A kit of parts according to claim 1, wherein said cross section outer diameter of said coupling element at least partially fits between said jaws and axially increases.

3. A kit of parts according to claims 1 or 2, wherein said jaws are shaped such that said clamp provides at least two positions for grasping said coupling element and that said positions are differently orientated in axial direction of said coupling element.

4. A kit of parts according to claims 1 to 3, wherein the clamp comprises a resilient biased switch engaging with a recess in said coupling element preventing the latter from being released.

5. A kit of parts according to claim 4, wherein said resilient biased switch comprises an engaging element shaped suitable to engage said recess in both said at least two positions.

6. A kit of parts according to any of the above claims, further comprising a base structure, pole or wall bracket for holding said clamp.

7. A kit of parts according to any of the above claims, wherein the elongated member is a shaft of an umbrella or parasol.

8. An umbrella or parasol comprising a kit of parts according to any of the above claims.
